# EUROPEAN PATENT APPLICATION

(11) **EP 0 649 138 A1**
(43) Date of publication of application: **19.04.1995**
(21) Application number: 93908112.1
(22) Date of filing: 19.04.1993
(51) Int. Cl.: G11B 20/12, G11B 27/32

(54) **MAGNETIC RECORDING/REPRODUCTION APPARATUS**

(71) Applicant: SONY CORPORATION, Tokyo 141 (JP); FUJITSU LIMITED, Kawasaki-shi, Kanagawa 211 (JP)
(72) Inventor: OKIHARA, Daijirou, Shinagawa-ku Tokyo 141 (JP); TANIYAMA, Yukio, Nakahara-ku Kawasaki-shi Kanagawa 211 (JP)
(74) Representative: Cotter, Ivan John
(86) International application number: JP9300503
(87) International publication number: WO9424668

(57) **Abstract**

The present invention is directed to easily retrieve a desired file in a magnetic recording/reproducing apparatus used as an external storage of a computer, for example. Recording tracks are obliquely formed on a magnetic tape, and data of a file is recorded on the recording tracks. Management data is recorded on the first part of the magnetic tape, and search patterns corresponding to the management data are recorded on the recording tracks extending in the longitudinal direction of the magnetic tape.

## Description

### Technical Field

This invention relates to a magnetic recording and/or reproducing apparatus, and is suitable to, for example, an external storage of computers etc..

### Background Art

Heretofore, in this type of magnetic recording and/or reproducing apparatus, the ID-1 format data recorder has been provided (ANSI x3.175-1990 19mm Type ID-1 Recorded Instrumentation), in which recording tracks are helically and sequentially formed on a magnetic tape to record and reproduce desired data with high density.

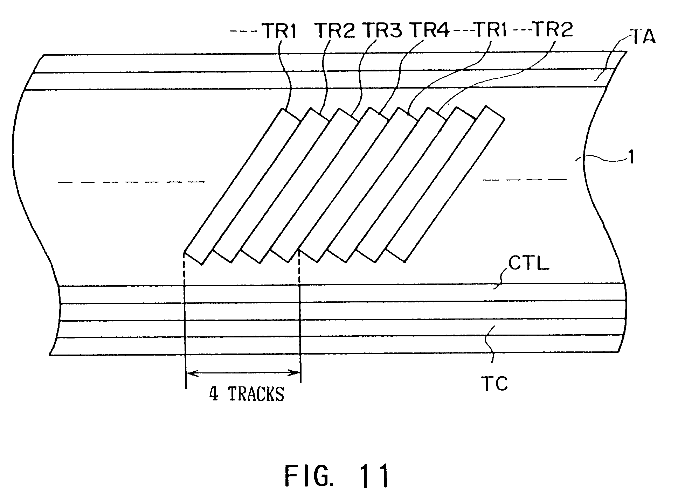

That is, in such a data recorder, as shown in Fig. 11, a magnetic tape 1 is wrapped around a rotary drum rotating at a predetermined speed. The magnetic tape 1 is run at a predetermined speed, so that recording tracks TRs (TR1, TR2, TR3, TR4, TR1, TR2, ...) are helically and sequentially formed by a magnetic head mounted on the above rotary drum. Thus, desired data is recorded to the recording track TR1.

Further, at this time, the data recorder forms recording tracks TA, CTL, and TC extended to the longitudinal direction at the upper and lower ends of the magnetic tape 1, and records the track set ID of the recording track TR to the recording track CTL.

The track set ID is an absolute position information recorded from the beginning of the magnetic tape 1, and is recorded between predetermined synchronizing signals in the period of 4 tracks with respect to the recording track TR.

The recording tracks TA and TC can record management data of the user etc., therefore, the data recorded in high density to the recording track TR can be searched easily, by reproducing the recording tracks TA, CTL, and TC.

Further in the data recorder, when a data is recorded to the recording track TR, the data is recorded having a parity code of product code added for error detecting and correcting, in order to record and/or reproduce the desired data reliably.

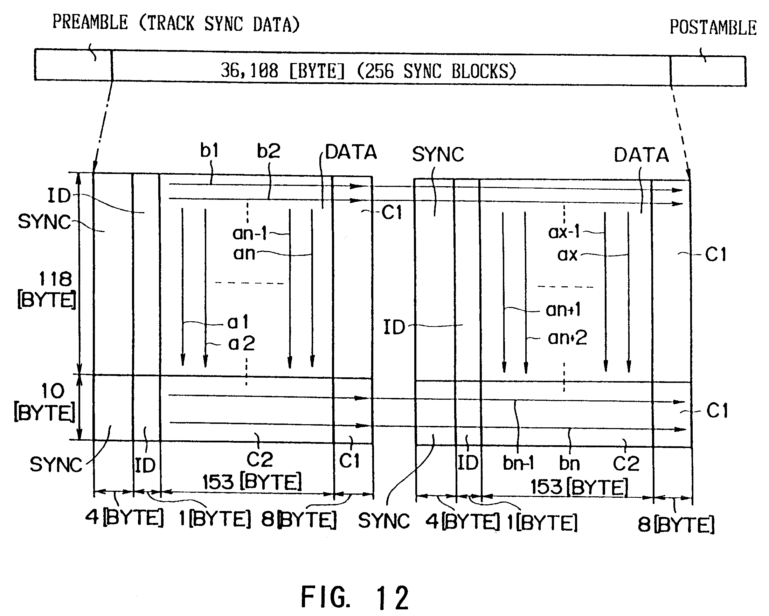

That is, as shown in Fig. 12, after the data recorder takes in the data DATA at a predetermined unit (= 36,108 [Byte]), it divides the data DATA into 306 blocks, and adds an error detecting and correcting code of the Reed-Solomon (i.e. being C2 code) to each block.

Furthermore, the data recorder divides the block into the first and the second field FIELD0 and FIELD1, and then adds an error detecting and correcting code of the Reed-Solomon (i.e. being C1 code) so as to orthogonalize with the C2 code in each of the fields FIELD0 and FIELD1.

Thereby, in the data recorder, the reproducing data is error-corrected by using the C1 and C2 codes in reproducing, in order to improve the bit error rate.

Further, when the data DATA that has been added the C1 and C2 codes in the above manner is recorded to the magnetic tape 1, the data recorder interleaves it every recording track TR. Thereby, the data DATA can be reproduced certainly, even if a drop-out etc. occurs.

In other words, in the data recorder, with respect to the data DATA input in the sequence designated by arrows a1, a2, ..., an-1, an, an+1, an+2, ... ax-1, and ax, the data DATA is recorded changing the sequence of inputting as shown by arrows b1, b2, ..., bn-1, bn, to interleave the above data DATA.

Further in the data recorder, at this time, a synchronising signal SYNC and a sync block data ID are added every predetermined unit (hereinafter referred to as "sync block"). Also, preamble and postamble data are added as whole when the data DATA is recorded.

Thereby, in the magnetic recording and/or reproducing apparatus, in reproducing, the synchronising signal SYNC, the sync block data ID, and the data DATA are reproduced with reference to a track sync data included in the preamble, so as to deinterleave-process with reference to the above synchronising signal SYNC and the sync block data ID.

Furthermore, by deinterleave-processing, even if a drop-out etc. occurs, errors exceeding the error-correcting capability of the C1 and C2 codes are effectively avoided from concentrating on one part.

By the way, in the ID-1 format data recorder for recording and reproducing desired data in such a manner, the bit error rate of about 10⁻¹⁰ can be warranted, which is satisfactory on practical use as a data recording and/or reproducing apparatus mainly for measurement.

If this bit error rate can be improved to about 10⁻¹⁵, it is considered that very improvement data can be stored for example, when applying it to a magnetic tape apparatus of computer systems used at banks etc..

This means that the usability of this type of data recorder can be improved, and the utilization can be expanded.

Further, since this type of data recorder can record in high-density, if the bit error rate can be improved, it is considered that the management of the magnetic tape can be made easier by collectively recording a plurality of file on a magnetic tape.

However, when a plurality of file is recorded collectively on a magnetic tape in this way, there is a problem that the search for respective files become troublesome.

In this case, the method of searching the magnetic tape at high speed can be considered. However, since the magnetic head helically crosses respective recording tracks, the desired data cannot be certainly reproduced, thus it is insufficient to be applied to such a data recorder.

### Disclosure of Invention

Considering the above points, this invention provides a magnetic recording and/or reproducing apparatus for easily searching a desired file.

To solve such problems in this invention, magnetic recording apparatuses 12 and 13 for recording predetermined file data D0 output from a file management device 11 to helical recording tracks TR1, TR2, TR3, ... on a magnetic tape 1, in which the beginning area of the magnetic tape 1 DITA is allocated to a management information area, a management information FIT representating the beginning of the recording position of the file data D0 is recorded to the helical recording track of the management information area TR1, TR2, TR3, ..., a longitudinal recording track TC expanded to the longitudinal direction of the magnetic tape 1 is formed at the upper and the lower sides of the helical recording tracks TR1, TR2, TR3, ..., and the longitudinal recording track TC is allocated to the search area of the file data D0, and a search pattern TREC is recorded to the search area corresponding to the management information FIT.

The longitudinal recording track TC expanded to the longitudinal direction of the magnetic tape 1 is formed, to allocate it to the search area for the file data D0 and record in it the search pattern TREC. Thereby, the desired track can be easily searched with reference to the search pattern TREC.

According to this invention, the recording track is formed to the longitudinal direction of the magnetic tape, and the search pattern is recorded to the recording track corresponding to the management data of the beginning of the magnetic tape, thus, a magnetic recording and/or reproducing apparatus in which a desired file can be easily searched by using the search pattern is obtained.

### Brief Description of Drawings

Fig. 1 is a block diagram showing a computer system according to one embodiment of this invention.

Figs. 2A and 2B are schematic diagrams illustrating the recording area on its magnetic tape.

Figs. 3A and 3B are schematic diagrams illustrating the recording format on the magnetic tape.

Fig. 4 is a schematic diagrams explaining the interleave-processing between recording tracks.

Fig. 5 is a schematic diagram illustrating the track format on the magnetic tape.

Fig. 6 is a block diagram showing a recording format control unit.

Fig. 7 is a block diagram showing the reproducing format control unit.

Fig. 8 is a block diagram showing the search circuit.

Fig. 9 is a schematic diagram explaining the tape mark track.

Fig. 10 is a schematic diagram explaining the file information table.

Fig. 11 is a schematic diagram explaining the D-1 format.

Fig. 12 is a schematic diagram explaining its interleave-processing.

### Best Mode for Carrying Out the Invention

With accompanying drawings, an embodiment of this invention will be described in detail.

### (1) General Construction

### (1-1) Construction of Computer System

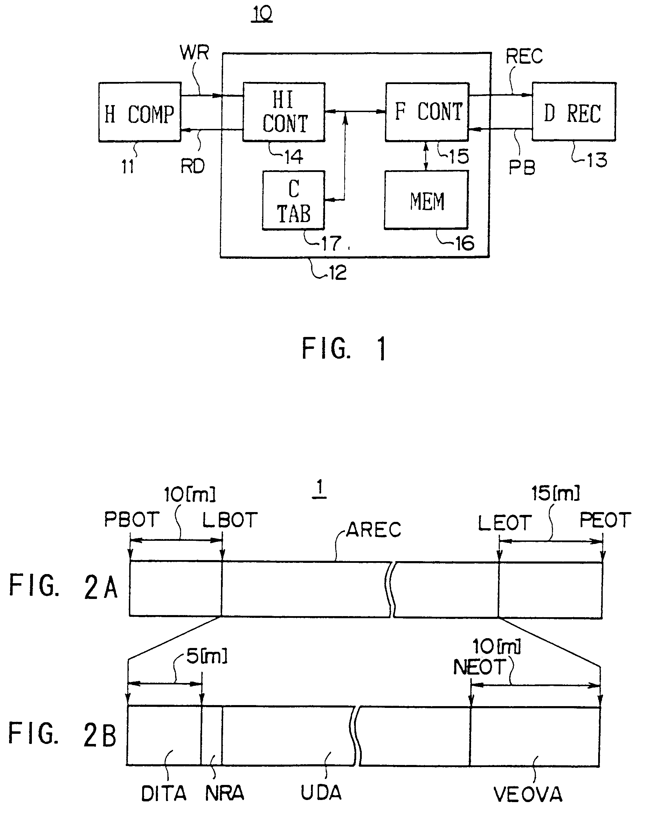

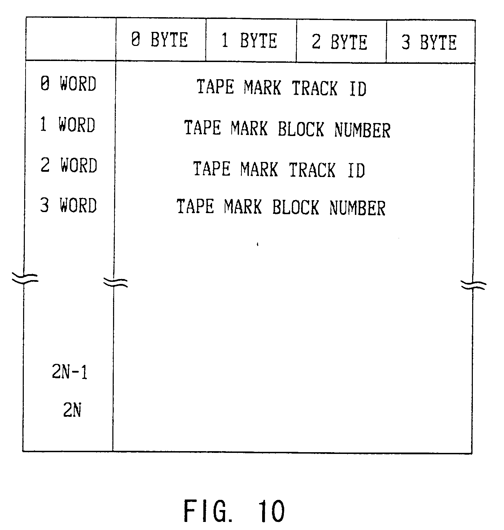

In Fig. 1, 10 generally shows a summary construction of computer system using this invention. A write data WR sent from a host computer 11 with a write request, is supplied to the ID-1 format data recorder 13 as a recording data REC through a data recorder control apparatus 12, so as to write the write data WR to a recording track on the magnetic tape.

Further, the magnetic tape of the data recorder 13 is reproduced corresponding to a read request input from the host computer 11, and thus obtained reproducing data PB is input to the host computer 11 as a read data RD through the data recorder control apparatus 12.

The data recorder control apparatus 12 is composed of a host interface control unit 14 and a format control unit 15. The host interface control unit 14 controls a channel interface between the host computer 11, and the format control unit 15 formats the data sending to or receiving from the data recorder 13 by using a memory 16.

Further, a control information between the host interface control unit 14 and the format control unit 15 is sent or received while referring to a control table 17.

In the computer system 10, by providing the data recorder control apparatus 12, the data recorder 13 can be used as an external memory of the host computer 11 by using the same interface as a conventional magnetic tape apparatus at the side of the host computer 11.

### (1-2) Recording Area on Magnetic Tape

In this computer system 10, as shown in Figs. 2A and 2B, in the magnetic tape 1 loaded to the data recorder 13, the center of tape in the longitudinal direction where it is comparatively not damaged, is used as a recording area AREC, in order to improve the bit error rate.

That is, as shown in Fig. 2A, for example, the position following the physical beginning PBOT of the magnetic tape 1 by for example, 10[m], is set as a logical beginning LBOT, also the position preceding the physical end PEOT by for example, 15[m] is set as a logical end LEOT, and an area from the logical beginning LBOT to the logical end LEOT is used as the recording area AREC.

In the recording area AREC, as shown in Fig. 2B, an area from the logical beginning LBOT to the position at the following that for example, by 10[m], is used as a directory information track area DITA.

After this directory information track area DITA, an area, until the vicinity of the logical end NEOT which is the position preceding the logical end LEOT by for example, 15[m], is used as an user recording track area UDA. Here, a predetermined length of a no recording area NRA is inserted between the directory information track area DITA and the user recording track area UDA. Also, an area from the vinicity of the end NEOT to the logical end LEOT is used as a volume end information area VEOVA.

### (1-3) Format of Recording Track

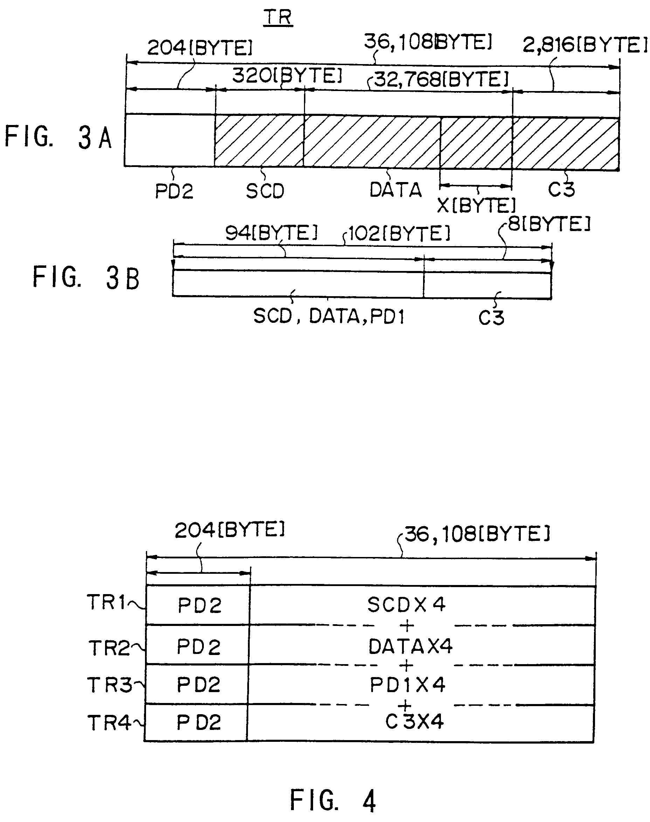

Here, in the computer system 10, an user data area of 36,108 [byte] with respect to 1 recording track prescribed by the ID-1 format, is formatted as shown in Figs. 3A and 3B, and the formatted data is interleaved every 4 tracks, so that the bit error rate can be improved.

Note that, Fig. 3A conceptually shows the kinds of information and lengths included in 1 track, and Fig. 3B is a concrete example of the C3-error correcting block before ID-1 formatting.

In the computer system 10, as shown in Fig. 3A, the write data WR from the host computer 11 is recorded as a recording data DATA of 32,768 [byte] in which 4 tracks, each track consisting of, for example, 1 block, are combined as a group.

At this time, with respect to 1 recording track TR, if the recording data DATA is less than 32,768 [byte], it is added the first supplementary data PD1 so as to be 32,768 [byte] in total. Further, to store an incidental information of this 1 recording track TR, a subcode data SCD of 320 [byte] has been prepared.

Adding to this as shown in Fig. 3B, the data recorder control apparatus 12 in which 8 [byte] of an error detecting and correcting code being Reed-Solomon (hereinafter referred to as "C3 code C3" corresponding to the C1 and C2 codes in the ID-1 format) is added by using a predetermined production polynomial expression for every 94 [byte] of sub code data SCD, recording data DATA, or first supplementary data PD1, in order to execute the error correcting more powerfully. Thereby, the bit error rate can be further improvement.

Further as shown in Fig. 4, with respect to the subcode data SCD, the recording data DATA, the first supplementary data PD1, and the C3 code C3, these are thus formatted every recording track, data of 4 recording tracks TR1, TR2, TR3, and TR4 are interleaved over tracks by a predetermined method, so that the bit error rate can be further improved.

Regarding the 4 recording tracks TR1, TR2, TR3, and TR4, the 204 [byte] of second supplementary data PD2 is added to every head of data of 1 recording track thus interleaved. Thereby, data size of 1 recording track TR is attained to 36,108 [byte] prescribed by the ID-1 format.

By formatting the second supplementary data PD2 to the head of data of 1 recording track TR, the above supplementary data PD2 can be allotted to the portion, in which the magnetic tape 1 itself is excessively damaged and the tracking is unstable out of recording tracks, due to the dashing in of the magnetic head. Thereby, the bit error rate of the recording data DATA can be further improved.

### (1-4) Layout of Recording Tracks

Here, in the computer system 10, the incidental information of the recording track 1 stored to the subcode data SCD, is composed of a track type information TRID representating the type of corresponding recording track TR, a block number BLNO to which the recording track TR belongs, a file number FLNO to which the recording track TR belongs, a write-retry count RTCT to the recording track TR, and a number of bytes of data included in the recording track BYCT, etc..

In the track type information TRID, a volume information table VIT, a file information table FIT, an update information table UIT, a dummy data track information DMY, an user data track information UDT, a tape mark track information TM, and an end recording information EOR, are recorded.

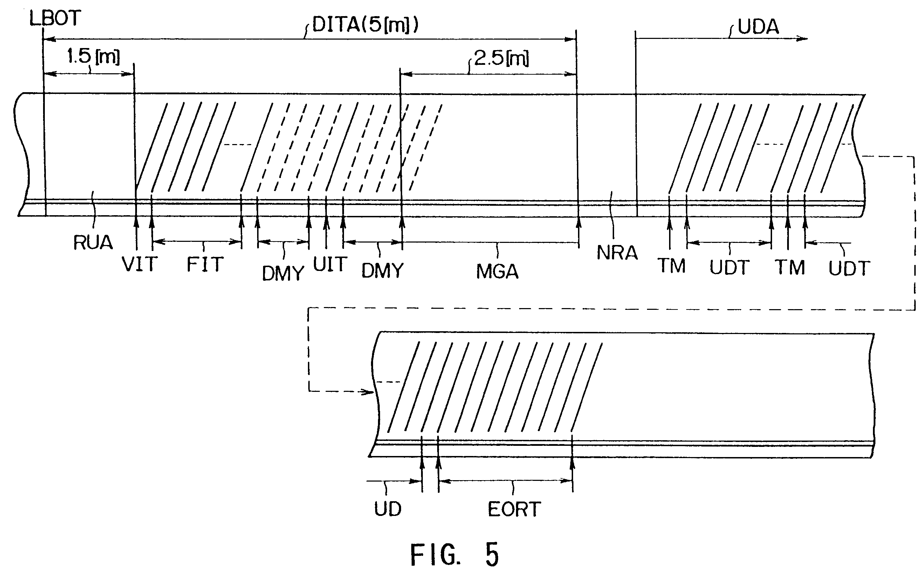

Here, as shown in Fig. 5, as the track type information TRID of the recording track TR formed in the directory information track area DITA of the magnetic tape 1, the volume information table VIT, the file information table FIT, the update information table UIT, and the dummy data track information DMY are used actually.

In the directory information track area DITA, the directory information table DIT managing files on the magnetic tape 1, is recorded as a whole. First, a rising area RUA is formed from the logical end LBOT of the magnetic tape 1 to the portion following that by 1.5[m], and then a recording track being the volume information table VIT is recorded with 4 tracks being a track set.

In the recording data DATA of the volume information table VIT, the beginning and end positions information of the data block in which the entirety of magnetic tape 1 is recorded as 1 volume and recorded to the user recording track area UDA, a length information of the file information table FIT, and a block number of the data block write-retried in recording, are recorded.

Further, the file information table FIT is recorded to the 256 recording tracks succeeding to the volume information table VIT. In the recording data DATA of the file information table FIT, the beginning position information of the file and the block length of are recorded every files recorded in the user recording track area UDA.

Then, next to the file information table FIT, a dummy data track information DMY is recorded by a predetermined number of tracks, and an update information table UIT is recorded to the succeeding portion by 4 recording tracks. In the recording data DATA of the update information table UIT, an information representating the presence of an update is recorded.

After this update information table UIT, the dummy data track information DMY is recorded to the recording track from the head of the directory information track area DITA to the position at the rear of that by 2.5[m]. The other directory information track area DITA by 2.5[m] is maintained as a reserve area MGA.

Next, the user data track information UDT, the tape mark track information TM, and the end recording information EOR are used as the track type information TRID of the recording track TR formed to the user recording track area UDA next to a no recorded area NRA which is next to the directory information track area DITA of the magnetic tape 1.

As the recording track TR of the user recording track area UDA, the recording track TR of the user data track information UDT by a plurality of blocks comprising 1 file, which is placed between the recording tracks TR of the tape mark track information TM of which an unit consists of 4 tracks, is recorded. Following the end of the user data track information UDT, the recording track TR of the end recording information EOR is recorded.

By the way, as the recording data DATA of the tape mark track information TM and the end recording information EOR, the first supplementary data PD1 by 32,768 [byte] is recorded, and the data corresponding to the write data WA input from the host computer 11 is recorded to the recording DATA of the recording track TR of the user recording track area UDA.

In this manner, in the computer system 10, a directory information track area DITA is provided at the beginning of the magnetic tape 1, and the contents of the user recording track area UDA is managed in the unit of files, so that the data recorded to the data recorder 13 can be accessed similar to an external storage device when viewed from the host computer 11.

### (1-5) Construction of Recording Format Portion of Format Control Unit

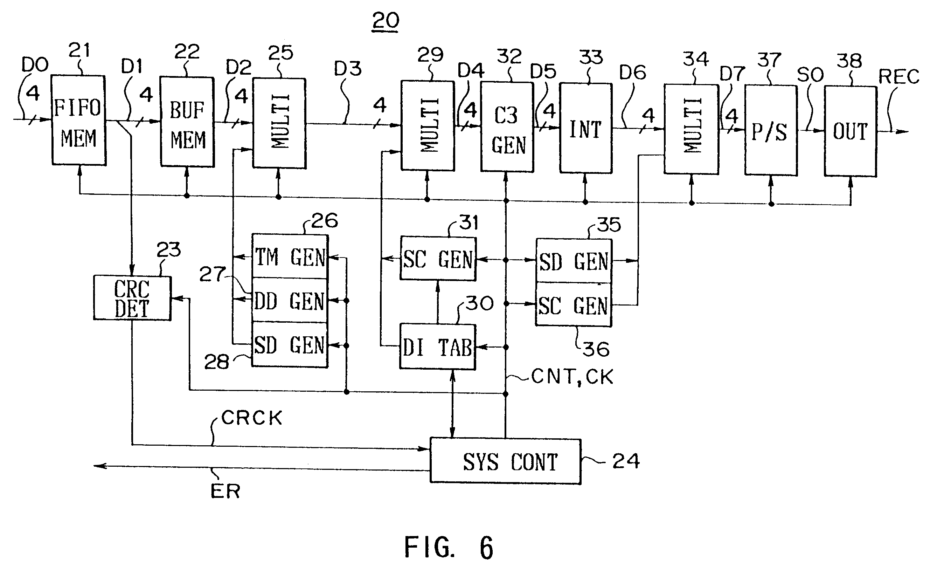

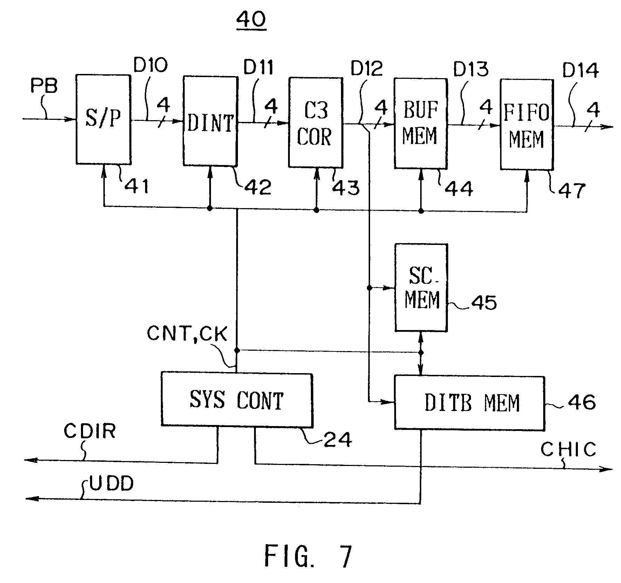

Here in the computer system 10, the format control unit 15 of the data recorder control apparatus 12 is composed of, along with a memory 16, a recording format control portion 20 and a reproducing format portion 40 as shown in Figs. 6 and 7.

That is, in the recording format control portion 20, the data in each unit of 32 bits is input from the host interface control unit 14 to a memory circuit 21 (i.e., FIFO (first in first out)) as a 4-channel 8-bit parallel write data D0, so as to synchronize the write data D0 with an internal clock CK, and write that to a buffer memory 22 as an input data D1 to send to a CRC error detecting circuit 23.

In addition, in the recording format control portion 20, the write data D0 is processed for each of the 4 channels, however, in this description of the recording format control portion 20, 1 channel will be described regarding the data.

The CRC error detecting circuit 23 error-detects with respect to the input data D1 by using the CRC (cyclic redundancy code), and inputs this detection result CRCK to a system control apparatus 24 being a computer configuration having a CPU.

Note that, when errors of the input data D1 based on the detection result CRCK of the CRC error detecting circuit 23 are detected by the system control apparatus 24 detects, which sends it to the host interface control portion 14 as an error detecting signal ER.

As a result, for example, the host interface control portion 14 resend processes the write data D0 containing an error.

A buffer memory 22 performs the buffering of the input data D1 for 1 recording track TR as shown in Figs. 3A and 3B and sends the first buffer data D2 corresponding to thus obtained recording data DATA to the first multiplexer 25.

To the first multiplexer 25, in addition to the first buffer data D2, the first supplementary data PD1 for the tape mark track information TM output from a tape mark generating circuit 26, a dummy data for the dummy data track information DMY output from the dummy data generating circuit 27, and the first supplementary data PD1 for the recording data DATA output from a supplementary data generating circuit 28, are input respectively.

Thereby, in the first multiplexer 25, the first supplementary data PD1 is added to the recording data DATA of the first buffer data D2 corresponding to a control signal CNT input from a system control apparatus 24 to generate the second buffer data D3, and this is output to the second multiplexer 29.

In the second multiplexer 29, in addition to the second buffer data D3, the directory information table DIT output from a directory information table memory 30, and the subcode data SDC which is generated by a subcode generating circuit 31 based on the contents of the directory information table 30, are input.

Actually, the directory information table memory 30 memorizes the directory information table DIT described above accompanied with Fig. 5. The subcode generating circuit 31 generates the beginning and end positions information of the data block, the length information of the file information table FIT, and the block number of the data block executing the write-retry in recording, etc., corresponding to the contents of the directory information table DIT.

Thereby, the second multiplexer 25 adds the subcode data SDC to the second buffer data D3 corresponding to the control signal CNT input from the system control circuit 24, so as to form the format described above accompanied with Figs. 3A and 3B, and sends it to a C3 code generating circuit 32 as the third buffer data D4.

The C3 code generating circuit 32 generates an 8 [byte] C3 code C3 as described above about Figs. 3A and 3B, and adds it to the buffer data D4, and then sends thus obtained recording track data D5 to an interleave circuit 33.

The interleave circuit 33 sequentially takes in the recording track data D5 by 4 tracks into the interleave memory 4 to output in the predetermined sequence, so as to interleave by 4 tracks shown in Fig. 4, and outputs thus obtained second recording track data D6 to the third multiplexer 34.

In the third multiplexer 34, in addition to the second recording track data D6, the second supplementary data PD1 output from the second supplementary data generating circuit 35, and the synchronizing code data output from a synchronizing code generating circuit 36, are input.

Thereby, the third multiplexer 34 adds the second supplementary data PD2 and the synchronizing code data to the second recording track data D6 corresponding to the control signal CNT input from the system control circuit 24, and outputs thus obtained third recording track data D7 to a parallel/serial converting circuit 37.

The parallel/serial converting circuit 37 converts the third recording track data D7 being 4-channel and 8-bit parallel into a serial recording data S0 of 32 bits. This is input to the data recorder 13 as a recording data REC via an output circuit 38.

In this way, the recording format control portion 20 of the format control unit 15 executes the format processing described above with Figs. 3A and 3B, 4, and 5 with respect to the write data D0 input from the host interface control unit 14, to generate the recording data REC, and records this on the magnetic tape 1 complying to the ID-1 format as shown in Figs. 11 and 12.

### (1-6) Construction of Reproducing Format Portion of Format Control Unit

In the reproducing format portion 40 shown in Fig. 7, a serial reproducing data PB reproduced by the data recorder 13 is input to a serial/parallel converting circuit 41, to convert it into the first reproducing data D10 being 4-channel and 8-bit parallel in an unit of 32 bits, and inputs this to a deinterleave circuit 42.

The deinterleave circuit 42 sequentially takes the first reproducing data D10 similar to the interleave circuit 33 of the recording format portion 20, and outputs it in the predetermined sequence, in order to deinterleave corresponding to the interleave processing of the interleave circuit 33, and inputs the thus obtained second reproducing data D11 to a C3 error correcting circuit 43.

The C3 error correcting circuit 43 error-corrects with respect to the second reproducing data D11 by using the C3 code C3 added by the C3 code generating circuit 32 of the recording format portion 20, and sends the thus obtained third reproducing data D12.

Practically, out of the third reproducing data D12, the data corresponding to the user recording data track UDT as shown in Fig. 5 is input to a buffer memory 44, and the data corresponding to the directory information table DIT is input to a subcode memory 45 and a directory information table memory 46.

In the buffer memory 44, the first supplementary data PD1 included in the third reproducing data D12 is deleted and input to a memory circuit 47 as the fourth reproducing data D13 and is synchronized with the external clock, and is output to the host interface control unit 14 as a read data D14 output from the reproducing format control portion 40.

By the way, when the directory information table DIT input to the directory information table memory 46 has been updated, the system control circuit 24 sends the update information UDD of the directory information table DIT to the data recorder 13 with a data recorder control signal CDIR, to update the contents of the directory information table DIT on the magnetic tape 1.

Further, the system control circuit 24 sends the reply to the request for data reproducing that is input from the host interface control unit 14, to the host interface control unit 14 as a control signal CHIC generating the output data D14.

In such a manner, in the reproducing format control portion 20 of the format control unit 15, with respect to the reproducing data PB reproduced by the data recorder 13, the inverse-format processing of the format processing described above with Figs. 3A and 3B, 4, and 5 is executed to generate the read data D14, and it is sent to the host interface control unit 14.

### (2) Search Data

Here, in the data recorder control apparatus 12, when the recording data DATA is generated by the recording format control portion 20, at the same time, a reference signal TREC for search is generated, and at the start of recording, it is recorded to the recording track TC expanded to the longitudinal direction of the magnetic tape 1.

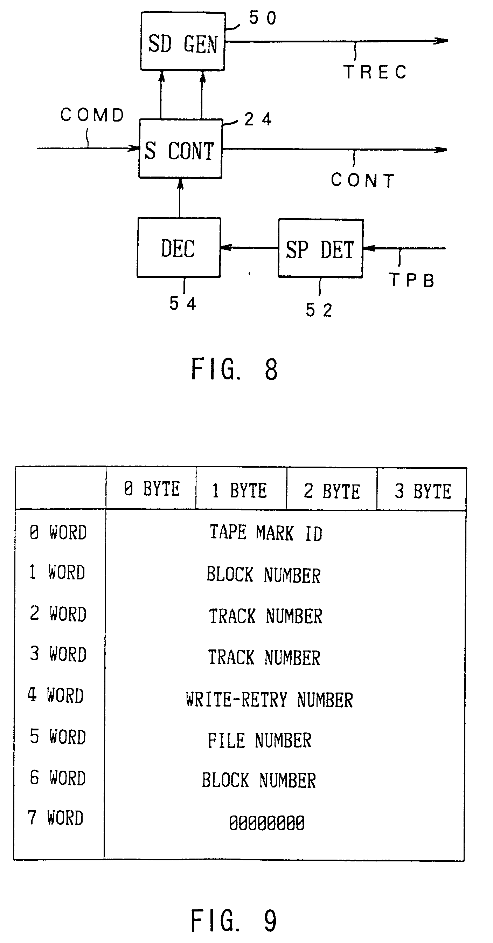

That is, as shown in Fig. 8, in recording, the system control circuit 24 outputs a control signal to a search data generating circuit 50, so as to have the reference signal TREC for search generated by the above search data generating circuit 50.

Here, the reference signal TREC for search is generated so as to record a search pattern which is repeating alternatively data of values 1 and 0, and then record a search data corresponding to the file information table FIT of the directory information track area DITA.

Therefore, in the data recorder control apparatus 12, the head of files can be detected easily by detecting the search pattern signal.

In the system control circuit 24, when recording the data in each unit of files, a tape mark track TM is formed at the head of respective files in order to have the head of respective files detected with reference to the tape mark track TM.

Here as shown in Fig. 9, in the tape mark track TM, as incidental information stored to the subcode data SCD, a tape mark ID representating that it is the tape mark track TM (in this case, a data of "0000FF00" is allocated), the block number and track number of the above tape mark track TM, the number of times of write-retry, a file number which is recorded next to the tape mark track TM, etc. are recorded.

Corresponding to this, as shown in Fig. 10, in the recording data recorded to the file information table FIT, a data in relation to each of tape mark tracks TM is sequentially recorded from the beginning of the magnetic tape 1 in 2 words units.

That is, a track set ID of the tape mark track TM (Fig. 11) is recorded to the head of words, and the block number of respective tape mark track TM is recorded to the succeeding word.

Therefore in the system control circuit 24, the above file information table FIT is updated every time when each file is updated or recorded.

Thereby, in the computer system 10, the tape mark track TM of the track set ID corresponding to the block number can be searched based on the block number of the file information table FIT, so that a desired file can be easily accessed on the basis of the above detected result.

Corresponding to the track set ID and the block number recorded to the file information table FIT, after the system control circuit 24 records the tape mark ID to the position designated by the track set ID (that is, it coincides with the tape mark track TM), and then records the block number.

Thereby, in the above computer system 10, a desired file can be searched with reference to the reproducing signal of the recording track TC.

In this manner, by recording the search data corresponding to the file information table FIT, even if the file information table FIT is broken, the desired file can be accessed easily.

That is, in the system control circuit 24, when accessing a file, the control signal CONT is output to the data recorder 13 in order to reproduce the data of the directory information track area DITA firstly.

At this time, the desired track set ID is detected corresponding to the recording data of the file information table FIT, and the magnetic tape 1 is fast forwarded to the track set ID.

In the system control circuit 24, the reproducing signal TPB of the recording track TC is taken into the search pattern detecting circuit 52. As a result, if the search pattern is detected, the data recorder 13 is switched to the reproducing mode. Further, the system control circuit 24 takes the reproducing signal TPB of succeeding recording track TC into the decoder 54 to detect the track set ID and the block number.

Here, if the above track set ID matches with the track set ID detected by the file information table FIT, the system control circuit 24 outputs the recorded data D14 reproduced by the reproducing format control portion to the host computer 11. On the contrary, if the track set ID does not match, the system control circuit 24 outputs the control signal CONT to the data recorder 13 to detect the succeeding search pattern.

### (3) Effect of Embodiments

According to the above construction, data for searching is recorded to the recording track expanded to the longitudinal direction of the magnetic tape 1, thus even if the head of the magnetic tape of the management data is lost, a desired file can be easily accessed by reproducing the above search data.

### (4) Other Embodiments

Note that, in the embodiments described above, the search pattern of which data of "1" and "0" are succeeded repeatedly is recorded. However, this invention is not only limited to this, but may apply various kinds of patterns at need.

Further, in the embodiments described above, the track set ID and the block number are recorded with the search pattern. However, this invention is not only limited to this, but may record them combining with various kinds of data at need.

Furthermore, in the embodiments described above, this invention is applied to the D-1 format data recorder. However, this invention is not limited to this, but may be widely applied to magnetic recording apparatuses for recording various kinds of data.

### DESCRIPTION OF NUMERALS

11 ... HOST COMPUTER, 12 ... DATA RECORDER CONTROL APPARATUS, 13 ... DATA RECORDER, 15 ... FORMAT CONTROL UNIT, 22 ... BUFFER MEMORY, 24 ... SYSTEM CONTROL CIRCUIT, 32 ... C3 CODE GENERATING CIRCUIT, 33 ... INTERLEAVE MEMORY, 42 ... DEINTERLEAVE MEMORY, 43 ... C3 ERROR OORRECTING CIRCUIT, 52 ... SEARCH PATTERN DETECTING CIRCUIT, 54 ... DECODER.

## Claims

1. A magnetic recording and/or reproducing apparatus wherein:
a magnetic recording apparatus for recording a predetermined file data outputted, from a file management device, to helical recording tracks on a magnetic tape,
the header area of said magnetic tape being allocated to a management information area, and a management information representating the beginning of recording position of said file data is recorded to said helical recording track of said management information area; and
a longitudinal track expanded to the longitudinal direction of said magnetic tape is formed at the upper or lower side of said helical recording track, and said longitudinal recording track is allocated to the search area of said file data, and a search pattern for search is recorded to said search area corresponding to said management information.
